# EUROPEAN PATENT SPECIFICATION

(11) **EP 3 472 046 B1**
(45) Date of publication and mention of the grant of the patent: **27.04.2022**
(21) Application number: 17731420.0
(22) Date of filing: 09.06.2017
(51) Int. Cl.: B64C 21/10, F15D 1/12

(54) **AERODYNAMIC ARTICLES AND METHODS THEREOF**
AERODYNAMISCHE ARTIKEL UND VERFAHREN DAFÜR
ARTICLES AÉRODYNAMIQUES ET PROCÉDÉS ASSOCIÉS

(30) Priority: 20.06.2016 US 201662352465 P
(43) Date of publication of application: 24.04.2019
(73) Proprietor: 3M Innovative Properties Company, St. Paul, MN 55133-3427 (US)
(72) Inventor: WU, Pingfan, Saint Paul Minnesota 55133-3427 (US); LEE, Nicholas A., Saint Paul Minnesota 55133-3427 (US); JOHNSTON, Raymond P., Saint Paul Minnesota 55133-3427 (US); PRAGGASTIS, Chris A., Saint Paul Minnesota 55133-3427 (US)
(74) Representative: Mathys & Squire
(86) International application number: PCT/US2017/036706
(87) International publication number: WO 2017/222826

(56) References cited:
- EP-A1- 0 205 289
- EP-A1- 0 246 914
- US-A- 4 650 138
- US-A1- 2015 251 217

## Description

### Field of the Invention

Provided are aerodynamic articles having air flow interfaces and related methods. The provided articles include aerodynamic articles for use on the exterior surfaces of aircraft.

### Background

Fuel costs are a major component to the operating costs of an airplane. For example, a commercial airplane can burn fuel at a rate of about 1 gallon (or about 4 liters) each second. Over the course of a 10-hour international flight, this can result in the consumption of about 36,000 gallons (about 150,000 liters) of fuel.

Increasing fuel efficiency in modern aircraft can be achieved by reducing structural weight and improving aerodynamic performance. The aerodynamics of an aircraft is impacted by aerodynamic drag, which exerts a force on the aircraft in the opposite direction from its velocity. Aerodynamic drag is especially significant in aircraft because they travel at such high speeds. The technical literature have reported that viscous or skin friction drag can account for about 40-50% of the total drag under cruise conditions (see Robert J.P., Drag Reduction: An Industrial Challenge. Special Course on Skin Friction Drag Reduction. AGARD-R-786, 1992, Paper No. 2).

Placing riblets, or tiny ridge-like structures aligned parallel to the air flow direction, on the exterior surfaces of a vehicle has been demonstrated to reduce skin friction drag and help reduce fuel usage. Riblets can be advantageouly deployed in areas of a surface of an aircraft where turbulent air flow regions are present. By disrupting large scale vortices in these turbulent regions near the surface in the boundary layer, riblets can significantly reduce drag on aircraft wings and other surfaces. Document EP0246914 A1 describes modification of a turbulent boundary layer flow over a surface to reduce its drag, by way of a series of streamwise riblet projections provided on the surface. These are arranged in a pattern consisting of spaced larger height projections between which are a plurality of smaller height projections.

### Summary

Sometimes it is necessary for a person to walk on exterior surfaces of a vehicle, such as the wings of an aircraft. Such a need might arise, for example, in the event of an emergency landing or when performing maintenance services on the aircraft. For safety reasons, it can be required by law to provide high-friction surfaces over designated walking areas. These designated areas need to be well marked so that people do not inadvertently step off of the high-friction areas of the wing and potentially suffer slips and falls. Additionally, it is desirable for such surfaces to provide adequate friction even when contaminated by lubricating liquids such as oil or water.

Current over-wing walkways use crushed minerals, of approximately 100 micrometers in diameter, that are painted on the aircraft wings. While this solution provides good friction for pedestrians, it is problematic in two respects. First, painting the texture onto the aircraft wings is messy and time-consuming. Second, from an aerodynamic perspective, the crushed minerals induce turbulence on the aircraft wing surface during flight that can significantly increase aerodynamic drag.

Use of riblet surfaces, as described above, on over-wing walkways can present technical challenges. First, while these surfaces can provide improved friction relative to a smooth surface, frictional performance tends to become significantly impaired when the surfaces when contaminated with certain liquids, which could include oil, water, or hydraulic fluid. Second, these over-wing walkways need to be prominently marked so that pedestrians can easily recognize where and where not to walk. Therefore, there is a technical need for an aerodynamic surface with reduced drag that can be provided with visual indicia and is capable of providing a high degree of friction against shoe surfaces under dry, oil-contaminated, and water-contaminated conditions.

An aerodynamic article according to the invention is provided. The aerodynamic article comprises: an aerodynamic body; a microstructured surface on the aerodynamic body, the microstructured surface being an oleophilic surface and comprising: a plurality of parallel, primary ridges defining major capillary channels; and a plurality of parallel, secondary ridges having a height less than that of the primary ridges and extending between and generally parallel to the primary ridges, each secondary ridge at least partially defining two or more minor capillary channels within a respective major capillary channel wherein the primary ridges have an average height H1, the secondary ridges have an average height H2, and the ratio H1/H2 is in the range from 2 to 10. In the aerodynamic article the oleophilic surface may be a polyurethane surface.

In a second aspect, an aerodynamic article according to the first aspect is provided, wherein the microstructured surface is provided by a microstructured film having opposed first and second major surfaces, the microstructured surface being present on the first major surface, and further comprising an adhesive layer disposed on the second major surface.

An aerodynamic article is disclosed comprising a plurality of layers, in the following order: a microstructured film having opposed first and second major surfaces, the first major surface comprising a plurality of parallel ridges defining capillary channels; a printed layer disposed on the second major surface and at least partially embedded in the microstructured film; and a printable layer, wherein the printed layer is disposed on at least a portion of the printable layer.

A method according to the invention of providing a frictional surface on an aerodynamic component is provided, the method comprising: determining a direction of air flow over an external surface of the aerodynamic component; and disposing onto the external surface a microstructured film with a first major surface being an oleophilic surface and comprising: a plurality of primary ridges defining major capillary channels aligned with the direction of air flow; and a plurality of secondary ridges having a height less than that of the primary ridges and extending between and generally parallel to the primary ridges, each secondary ridge at least partially defining two or more minor capillary channels within a respective major capillary channel wherein the primary ridges have an average height H1, the secondary ridges have an average height H2, and the ratio H1/H2 is in the range from 2 to 10.

### Brief Description of the Drawings

FIG. 1 is a photograph of an aerodynamic article;
FIG. 2 is an enlarged, schematic view of the aerodynamic article in FIG. 1, showing top and side surfaces;
FIG. 3 is an enlarged, schematic view of an aerodynamic article according to an embodiment of the invention showing top and side surfaces;
FIG. 4-8 are enlarged, schematic side view showing of respective aerodynamic articles according to various exemplary embodiments of the invention showing side surfaces.

### DEFINITIONS

As used herein:
"aerodynamic" means having a shape intended to reduce the drag from ambient air flow;
"air-bleedability" means allowing for egress of air from the interface between the adhesive and the surface of the substrate;
"ambient conditions" means at 25 degrees Centigrade and a pressure of 1 atmosphere (or 100 kPa);
"microstructured" means having a configuration of three-dimensional structures where at least two dimensions of the structures are microscopic;
"oleophilic" means of or relating to a substance that has an affinity for oils;
"release liner," or merely "liner", refers to a flexible sheet which after being placed in intimate contact with pressure-sensitive adhesive surface may be subsequently removed without significant damage to the pressure-sensitive adhesive; and
"substrate" refers to a body on which an adhesive, such as a pressure-sensitive adhesive, is applied;

### Detailed Description

The present disclosure describes articles having microstructured surfaces capable of providing improved aerodynamic properties and enhanced friction. These can be found, for example, on aircraft surface films that function as a safety walkway on an aircraft. The provided articles need not, however, be limited to surface films. These microstructured surfaces may, for example, be provided directly on an exterior panel of an aircraft.

Moreover, the provided surfaces need not be restricted to aircraft applications. These microstructured articles may advantageously extend to adjacent applications where a high-friction, aerodynamic surface is desirable. Such applications could include, for example, the exterior surfaces of commercial ground vehicles.

Repeated use of reference characters in the specification and drawings is intended to represent the same or analogous features or elements of the disclosure. It should be understood that numerous other modifications and embodiments can be devised by those skilled in the art, which fall within the scope of the appended claims. . The figures are not drawn to scale.

### Aerodynamic articles

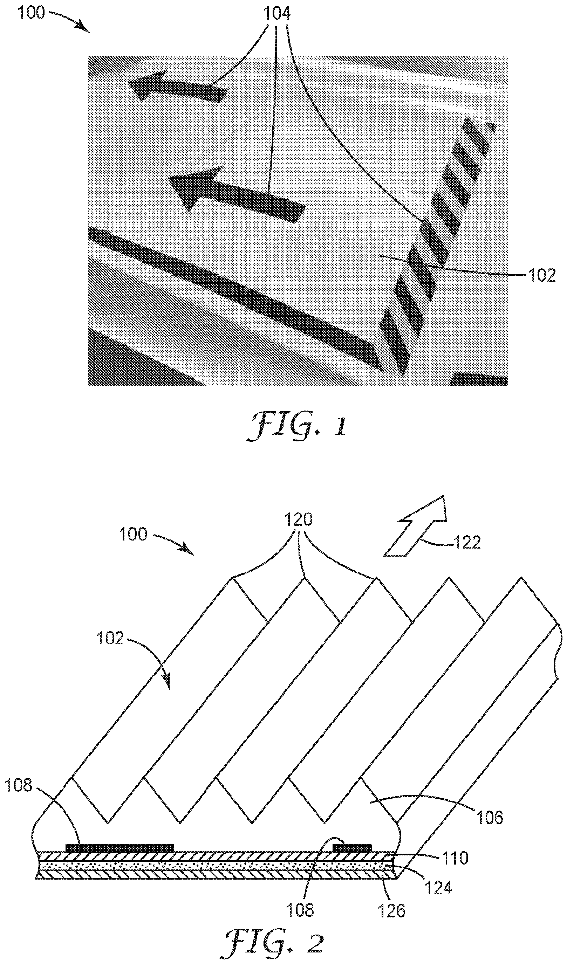

FIG. 1 shows a multilayered aerodynamic article which is herein designated by the numeral 100. This aerodynamic article 100, shown here on a macroscopic scale, can be used as an over-the-wing walkway film on an aircraft wing and has a microstructured surface 102 disposed on an exposed major surface. The microstructured surface 102 serves a dual purpose by (1) reducing drag at the air flow interface, and (2) providing a non-slip surface for foot traffic.

Embedded in the aerodynamic article 100 below the microstructured surface 102 are markings 104 that can guide pedestrians standing on the aircraft wing as to the locations of the non-slip walking surfaces. In the embodiment shown, the markings 104 include arrows, lines, and striped bars set out against an opaque, white background for visual contrast.

FIG. 2 reveals the microstructured surface and layer configuration of the aerodynamic article 100 of FIG. 1. The aerodynamic article 100 includes, as shown, a base layer 106 having the microstructured surface 102 exposed on its working surface (as shown, its top surface) to provide a microstructured film.

The microstructured surface 102 is comprised of a series of parallel ridges 120 whose surfaces resemble a saw tooth pattern when viewed along a direction parallel to the ridges 120. As further shown in FIG. 2, the ridges 120 are uniformly aligned along air flow direction 122. By orienting the ridges 120 substantially parallel to the air flow direction 122, it is possible to achieve a significant reduction in turbulent exchange of momentum between the air flow and the aerodynamic article 100.

The microstructured surface 102 is characterized by an overall ridge height of about 63 micrometers, a peak-to-peak ridge spacing of 63 micrometers, and vertices of approximately 53 degrees. These dimensions are not critical and, as will be shown, geometries with different ridge heights, shapes, and spacings are possible.

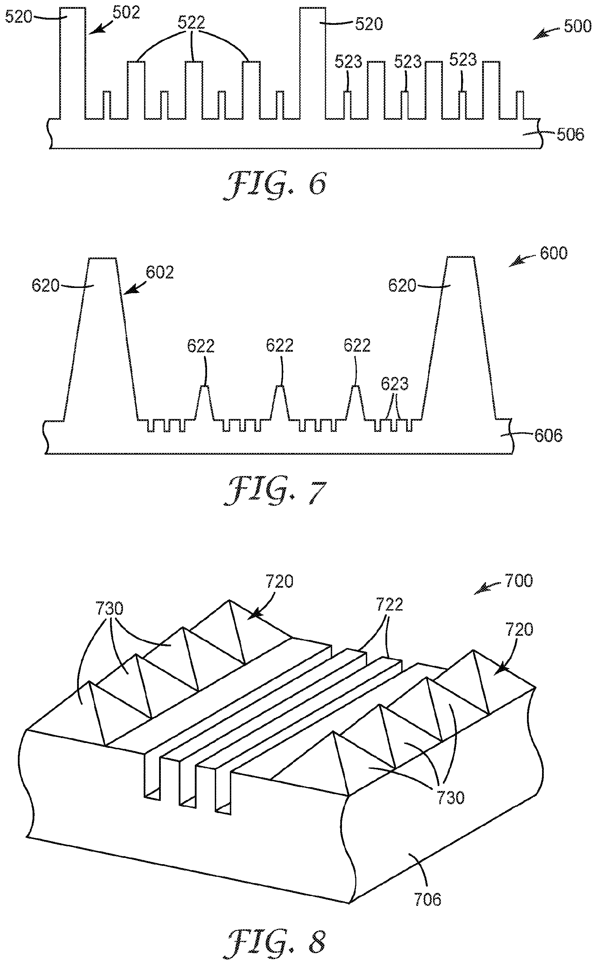

It is further noted that the ridges in FIG. 2 are symmetrical about their peak and represent continuous, uninterrupted bodies that traverse the entire dimension of the aerodynamic article 100, but this need not be the case. If desired, asymmetric ridge profiles may be used, as described for example in co-pending PCT International Publication No. WO2016/130279, (Swanson et al). The cross-sectional profiles of the ridges could also vary along their length dimension and even include discontinuities, as will be exemplified later in FIG. 8. Other useful geometries for reducing aerodynamic drag are described in U.S. Patent Nos. 5,971,326 (Bechert), 8,668,166 (Rawlings et al.), and 8,678,316 (Rawlings et al.).

Extending across and contacting the base layer 106 is a discontinuous printed layer 108, in turn disposed on underlying printable layer 110. As illustrated, the printable layer 110 is a continuous layer and extends entirely across the major surfaces of the aerodynamic article 100. The printed layer 108 overlaps and extends across an area less than that of the printable layer 110. In some instances, the printable layer 110 may itself be comprised of two or more discrete layers, where the top layer comprises a printable polymeric material.

Since the printed layer 108 extends across an area less than that of its neighboring layers, the base layer 106 and printable later 110 also directly contact each other. One or more printed layers 108 can be advantageously used to provide visual markings, such as the markings 104 in FIG. 1, on the aerodynamic article 100. Preferably, the base layer 106 is transparent or translucent to allow the printed layer 108 to be viewed through the base layer 106.

The printable layer 110 may be transparent or opaque. If opaque, the printable layer 110 is preferably has a color that provides contrast with that of the printed layer 108. Optionally and as shown, the printed layer 108 is at least partially embedded in the base layer 106 such that the interface between the printed layer 108 and the printable layer 110 is substantially coplanar with the interface between the base layer 106 and the printable layer 110. In this configuration, the printable layer 110 flatly engages both the printed layer 108 and the base layer 106 along a generally planar surface. Advantageously, such a configuration allows for an overall reduced profile for the aerodynamic article 100, enabling greater flexibility and conformability.

Surprisingly, it was observed that the microstructured surface 102 did not induce a prismatic effect, which would normally occur when placing a film with the microstructured surface 102 over a visual marking. Said prismatic effect, commonly seen in privacy screens, can render the printed layer 108 invisible when viewed at certain angles relative to the plane of the aerodynamic article 100, which would be undesirable in over-wing walkway applications. Here, it is believed that this prismatic effect is avoided by virtue of the base layer 106 intimately contacting the underlying layers, without any air gap therebetween.

Referring again to FIG. 2, an adhesive layer 124 extends across and directly contacts the printable layer 110. Preferably, the adhesive layer 124 is comprised of a pressure-sensitive adhesive. The adhesive layer 124 allows the aerodynamic article 100 to be applied and secured to the surface of a suitable substrate, such the external surface of an aircraft wing.

The final layer depicted in FIG. 2 is an optional release liner 126 that protects the adhesive layer 124 from contamination during storage and handling of the aerodynamic article 100 prior to use. This release liner 126 is generally stripped away from the other layers immediately prior to application to the substrate by the enduser.

While not explicitly shown, the printable layer 110 and printed layer 108 may optionally be omitted from this construction such that the base layer 106 directly contacts the adhesive layer 124.

As a further option, not shown in the figures, the adhesive layer 124 can itself have a microstructured surface. Such a microstructured surface can provide air-bleedability when the aerodynamic article 100 is applied to a substrate by a user. Air-bleedability is a beneficial feature because it enables bubbles of gas or liquid that would be otherwise trapped beneath the adhesive layer 124 to be vented to the edges of the aerodynamic article 100 during application. This, in turn, can enhance aesthetics and improve adhesive wet out and overall bond strength of the product.

This microstructured surface may be the same or different from the microstructured surface 102 of the base layer 106. This microstructured surface may define a plurality of channels that extend across the exposed major surface of the adhesive layer 124 when the release liner 126 is removed.

The channels either terminate at the periphery of the adhesive layer 124 or communicate with other channels that terminate at a periphery of the adhesive layer 124. When the aerodynamic article 100 is applied onto a given substrate, pathways defined by the channels provide egress for air or any other fluid trapped at the interface between the adhesive layer 124 and the substrate to a periphery of the article.

The channels can be created by embossing or forming a microstructured surface into the adhesive. In FIG. 2, the release liner 126 can optionally include discrete, protruding three-dimensional structures to emboss the desired microstructure surface onto the adhesive layer 124. These three-dimensional structure also serve to preserve such microstructured surface until such time the aerodynamic article 100 is to be applied.

The composition of the release liner 126 is not particularly restricted. Release liner compositions may include , plastics such as polyethylene, polypropylene, polyesters, cellulose acetate, polyvinylchloride, and polyvinylidene fluoride, as well as paper or other substrates coated or laminated with such plastics. Embossable coated papers or thermoplastic films can be siliconized or otherwise treated to impart improved release characteristics.

Additional details for providing these structures on the release liner are disclosed in U.S. Patent No. 5,650,215 (Mazurek).

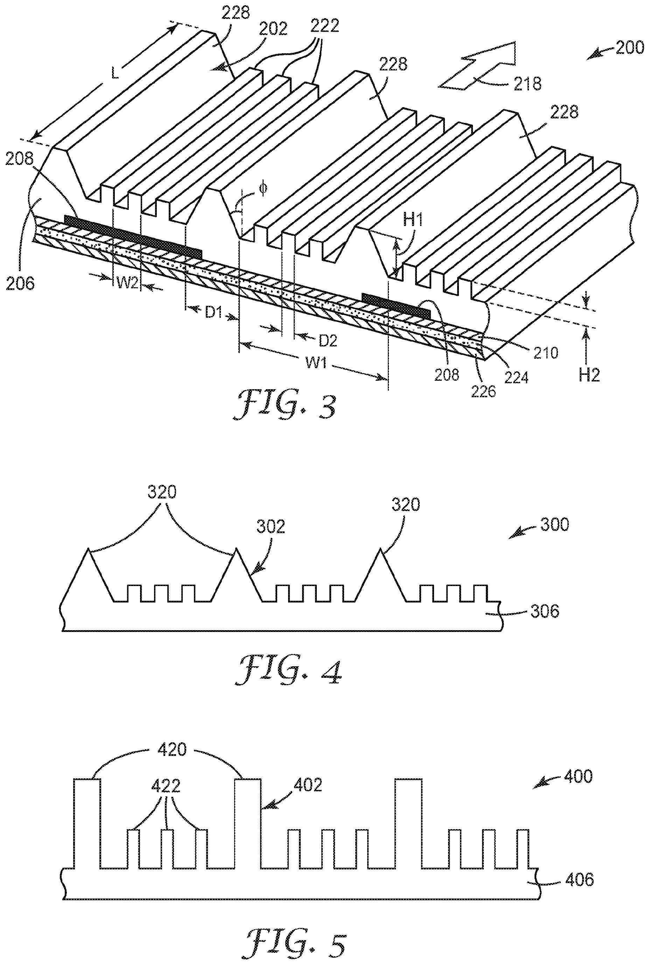

FIG. 3 shows a aerodynamic article 200 according to the invention having a multilayered structure similar in some respects to that of FIG. 2, but using a different microstructured film. Like the aerodynamic article 100, the article 200 has a base layer 206 with a microstructured surface 202 exposed at the top of the article. Beneath the base layer 206 are a discontinuous printed layer 208, a printable layer 210, an adhesive layer 224, and a release liner 226. These underlying layers have characteristics generally analogous to those already described with respect to the aerodynamic article 100, and thus will not be re-examined here.

Unlike the aerodynamic article 100, the microstructured surface 202 of the aerodynamic article 200 shows a series of primary ridges 220, where adjacent primary ridges 220 are separated by one or more secondary ridges 222. Both series of ridges 220, 222 are aligned with air flow direction 218. In the example shown, there are exactly three secondary ridges 222 between neighboring primary ridges 220. The secondary ridges 222 extend alongside the primary ridges 220 and define a plurality of minor capillary channels residing in major capillary channels defined by the primary ridges 220. Each of the major and minor capillary channels are preferably linear (extending along a straight line), as shown.

Optionally and as shown, the primary and secondary ridges 220, 222 have cross-sectional shapes that are essentially constant along their respective lengths. If desired, the primary and secondary ridges 220, 222 could also have cross-sections that vary in size or shape along their length. For example, there could be discontinuities present in either or both of the primary and secondary ridges 220, 222.

The number of secondary ridges between adjacent primary ridges is not particularly restricted and can depend on the relative side of the features and the lateral separation between the primary ridges, along with other factors. In some embodiments, there is at least one secondary ridge between adjacent primary ridges. There could be up to 10, up to 7, or up to 5 secondary ridges between adjacent primary ridges.

In this generic embodiment, each of the primary ridges 220 represents an elongated body with a length L, a height H1, and a peak-to-peak ridge spacing W1. The secondary ridges 222 share the same length L, but have a smaller height H2 and peak-to-peak ridge spacing W2. As further shown, each of the primary ridges 220 has a base width D1 and each secondary ridge 222 has a base width D2.

Optionally, L is equivalent to a major dimension of the article 200; that is, the primary and secondary ridges 220, 222 may extend entirely across the major surfaces of the aerodynamic article 200.

In FIG. 3, the secondary ridges 222 traverse essentially the entire bottom surface of each major capillary channel defined by the primary ridges 220. Alternatively, it is contemplated that the secondary ridges 222 could extend across only a portion of the bottom surface.

For the microstructured surface 202 to effectively spread or wick liquids away from the upward-facing surfaces, the capillary channels defined by the primary and secondary ridges 220, 222 should be sized within appropriate ranges to sequester water, oil, and/or other liquids present on the surface of the aerodynamic article 200 through capillary action.

The size of the major capillary channels is linearly dependent on height H1 and spacing W1. The height H1 can be at least 25 micrometers, at least 35 micrometers, at least 45 micrometers, at least 55 micrometers, or at least 65 micrometers; in these embodiments, the height H1 can be up to 250 micrometers, up to 200 micrometers, up to 150 micrometers, up to 120 micrometers, or up to 95 micrometers.

The spacing W1 can be at least 25 micrometers, at least 45 micrometers, at least 65 micrometers, at least 85 micrometers, or at least 100 micrometers. Further, the spacing W1 can be up to 500 micrometers, up to 400 micrometers, up to 350 micrometers, up to 300 micrometers, or up to 250 micrometers. The spacing W1 is in the range from 25 micrometers to 500 micrometers, in the range from 50 micrometers to 250 micrometers. in the range from 100 micrometers to 250 micrometers.

With respect to the secondary ridges 222, the height H2 can be at least 5 micrometers, at least 7 micrometers, at least 9 micrometers, at least 11 micrometers, or at least 13 micrometers; in some embodiments, the height H2 can be up to 50 micrometers, up to 40 micrometers, up to 30 micrometers, up to 24 micrometers, or up to 19 micrometers. H2 can also be 0, which would represent an embodiment where no secondary ridges are present.

The spacing W2 between the secondary ridges 222 can be at least 10 micrometers, at least 14 micrometers, at least 18 micrometers, at least 22 micrometers, or at least 26 micrometers. Further, the spacing W2 can be up to 100 micrometers, up to 80 micrometers, up to 60 micrometers, up to 48 micrometers, or up to 38 micrometers.

The primary ridges 220 can have a base width D1 of at least 25 micrometers, at least 35 micrometers, at least 45 micrometers, at least 55 micrometers, or at least 60 micrometers. Further, the base width D1 can be up to 250 micrometers, up to 200 micrometers, up to 150 micrometers, up to 125 micrometers, or up to 100 micrometers.

The secondary ridges 222 can have a base width D2 of at least 5 micrometers, at least 7 micrometers, at least 9 micrometers, at least 11 micrometers, or at least 12 micrometers. Further, the base width D2 can be up to 50 micrometers, up to 45 micrometers, up to 40 micrometers, up to 35 micrometers, or up to 30 micrometers.

As FIG. 3 shows, the height H1 of the primary ridges 220 significantly exceeds the height H2 of the secondary ridges 222. Advantageously, the height discrepancy can enable fluid spreading to occur at different size scales. For example, a relatively small amount of liquid contaminant could be captured by the minor capillary channels defined by the secondary ridges 222. When a larger amount of contaminant, sufficient to cause the minor capillary channels to "overflow," is applied to the microstructured surface 202, the major capillary channels can act to capture excess contaminant that escapes the minor capillary channels.

In this manner, the combination of large and small microstructured features (here, primary ridges 220 and secondary ridges 222) can provide an aerodynamic article that significantly reduces the overall amount of excess fluid on its upward-facing surfaces. Since these upward-facing surfaces are the ones that tend to come into direct contact with the shoe surfaces of pedestrians, this can result in a more effective frictional surface than either type of feature acting alone.

In some embodiments, the ratio H1/H2 is at least 2, at least 2.5, at least 3, at least 3.5, or at least 4. The ratio H1/H2 is up to 10, up to 9, up to 8, up to 7, up to 6, or up to 5. The ratio H1/H2 is in the range from 2 to 10, is in the range from 3 to 6, is in the range from 4 to 5.

The ratio W1/H1, which generally reflects the size of the major capillary channels as viewed in cross-section, can be at least 1 and up to 3, up to 4, or up to 5. The ratio W1/H1 is in the range from 1 to 5, in the range from 1 to 4, in the range from 1 to 3.

Optionally, and as further shown in FIG. 3, the primary ridges 220 have sloping sidewalls 228. As indicated in the figure, the sidewalls 228 form an acute angle φ with respect to a normal vector extending from the bottom surface of the major capillary channels. In preferred embodiments, the angle φ can be as low as 0 degrees (which would result in a rectangular ridge profile) and can be up to 60 degrees, up to 50 degrees, up to 40 degrees, up to 30 degrees, or up to 20 degrees. The sloping sidewalls has a sidewall angle φ of from 0 degrees to 60 degrees, measured from a normal vector extending from the bottom surface of the major capillary channels, of from 0 degrees to 45 degrees, of from 0 degrees to 30 degrees.

The secondary ridges 222, as depicted, have vertical sidewalls. This would be represented by corresponding sidewall angle of 0 degrees.

It is to be understood that the above parameters may or may not be constant across the microstructured surface 202, and indeed such variances may exist by design or as the result of manufacturing tolerances. In cases where there is variability in the heights, lengths and/or spacings of these features, the parameters referred to above may be average values of such parameters.

FIG. 4 is directed to an aerodynamic article 300 according to the invention having a microstructured surface 302 disposed on a base 306, akin to those found on the base layers 106, 206 of the aerodynamic articles 100, 200. Here, the aerodynamic article 300 can be a standalone component, or a subcomponent of another article, such as the microstructured film in a multilayered article exemplified in FIGS. 1-3.

The microstructured surface 302 shares many features of the microstructured surface 202 but differs in that the primary ridges, at their peak, come to a point instead of a plateau. This has the result of slightly increasing the ratio H1/H2 and can also serve to further concentrate the areal distribution of normal forces imparted to the article 300 when it encounters pedestrian traffic.

FIG. 5 presents a slightly different aerodynamic article 400 according to the invention comprised of a base 406 having a microstructured surface 402 in turn comprised of primary ridges 420 and secondary ridges 422. The primary ridges 420 have cross-sectional dimensions approximately twice that of the secondary ridges 422, but similar rectangular profiles as shown.

FIG. 6 shows another variant represented by aerodynamic article 500 according to the invention. The aerodynamic article 500 uses a base 506 with a microstructured surface 502 comprised of primary ridges 520, secondary ridges 522, and tertiary ridges 523, presented in order of decreasing size. The ridges 520, 522, 523 share the same cross-sectional shape (in this case, a rectangular shape) but present channels having three different sizes in a single microstructured surface. Advantageously, the configuration of the aerodynamic article 500 provides an additional, smaller, fluid-spreading element whereby the aerodynamic article 500 can spread very small amounts of fluid while exposed portions of the tertiary ridges 523 in the minor capillary channels remain available to enhance friction.

FIG. 7 shows yet another aerodynamic article 600 according to the invention that has a base 606 and a microstructured surface 602 with primary ridges 620, secondary ridges 622, and tertiary ridges 623. In this variant, however, the tertiary ridges 623 are recessed within the base 606 such that the top surfaces of the tertiary ridges 623 are coplanar with the surfaces of the base 606 on which the primary and secondary ridges 620, 622 are situated.

FIG. 8 provides yet another aerodynamic article 700 according to the invention with a base 706 containing discontinuous primary ridges 720 and continuous, recessed secondary ridges 722, with capillary channels extending therebetween. Here, as shown, the primary ridges 720 are represented by a series of discrete, pyramidal features. Here, the pyramidal features are square pyramids 730. Alternatively, or in combination, the pyramidal features may include triangular pyramids, hexagonal pyramids, or polygonal pyramids in general.

As a further variant, it is also possible for square pyramidal features to extend exclusively across the working surface of the aerodynamic article 700 in two dimensions. Said another way, the microstructured surface 700 could be characterized by nested rows of polygonal pyramids collectively defining a series of linear capillary channels parallel to the nested rows.

Further options and advantages associated with the embodiments of FIGS. 4-8 are similar to those already described with respect to the embodiments depicted in FIGS. 1-3 and shall not be repeated.

Generally, the provided aerodynamic articles may be fabricated using known extrusion, printing and lamination processes.

In some embodiments, these articles are prepared by first embossing a flat base layer to form a microstructured film, and then laminating the microstructured film onto any remaining layers (e.g., the printed layer, printable layer, and/or adhesive layer). Conveniently it is possible for the lamination step to be carried out simultaneously with the embossing of a pre-existing base layer to form the microstructured film. The embossing step can be carried out at elevated temperatures and pressures using, for example, an autoclave.

Optionally, the embossing of the base layer takes place after the lamination step. For example, the base layer may be provided as a flat thermoplastic film, laminated to one or more underlying layers, and then embossed to form the microstructured film.

The microstructured film can also be prepared from the polymer melt using, for example, an extrusion embossing process. In an exemplary process, a flowable polymeric material is continuously brought into line contact with a molding surface of a molding tool. The molding tool includes an embossing pattern cut into the surface of the tool, the embossing pattern representing the microchannel pattern of the film in negative relief. Capillary channels are then formed in the flowable material by the molding tool, and finally, the flowable material is solidified to form the microstructured film.

In some embodiments, the flowable material is extruded from a die directly onto the surface of the molding tool such that flowable material is brought into contact with the surface of molding tool. The flowable material may comprise, for example, various photocurable, thermally curable, and thermoplastic resin compositions. The line contact is defined by the upstream edge of the resin and moves relative to both molding tool and the flowable material as molding tool rotates. The resulting film may be a single layer article that can be taken up on a roll to yield the article in the form of a rolled good.

Further aspects of the direct coating method are described, for example, in co-pending PCT International Publication No. WO2016/130279, (Swanson et al.).

These methods are by no means exhaustive and other known polymer film manufacturing techniques could also be used, such as casting or profile extrusion.

In a broad sense, the aerodynamic articles described herein may themselves function as aerodynamic components or be used to impart frictional surfaces and/or reduce aerodynamic drag on existing aerodynamic components.

One useful application of the aerodynamic articles described herein is represented by surfacing films, such as an erosion resistant surfacing films for aircraft. An exemplary application begins with identifying a predominant direction of air flow over an external surface of the aerodynamic component, commonly an airplane wing. With the air flow direction identified, a frictional surface is then obtained on the aerodynamic component by adhesively coupling to the external surface one or more microstructured films.

Upon installation, the microstructured films preferably feature an exposed major surface with a plurality of primary ridges defining major capillary channels that are aligned with the air flow direction. Optionally, the microstructured films include a plurality of secondary ridges having a height less than that of the primary ridges and extending between and generally parallel to the primary ridges, the secondary ridges at least partially defining two or more minor capillary channels within each major capillary channel.

Optionally, the aforementioned microstructured films include markings that are embedded in the aerodynamic article as described previously.

### Base layer compositions

The base layers discussed herein can be formed from any oleophilic polymeric materials suitable for casting or embossing. These polymeric materials can be inherently plastically deformable (or modified to become plastically deformable). Acceptable polymeric materials include, for example, polyolefins, polyesters, polyamides, poly(vinyl chloride), polyether esters, polyimides, polyesteramide, polyacrylates, polyvinylacetate, polyurethanes, and hydrolyzed derivatives of polyvinylacetate.

Useful polyolefins include polyethylene and polypropylene, blends and/or copolymers thereof, and copolymers of propylene and/or ethylene with minor proportions of other monomers, such as vinyl acetate or acrylates such as methyl and butylacrylate. Polyolefins readily replicate the surface of a casting or embossing roll. They are tough, durable and hold their shape well, thus making prepared films easy to handle after the casting or embossing process.

Oleophilic polymers, capable of wicking and/or spreading of oil droplets on the surface of the aerodynamic article, are useful for aircraft over-wing walkway applications. In some embodiments, it may be advantageous to use microstructured surfaces that include both oleophilic and hydrophilic polymers that operate over different areas or possibly even over the same areas.

Microstructured films can be cast from thermosets (curable resin materials) such as polyurethanes, acrylates, and silicones, and cured by exposure radiation (e.g., thermal, ultraviolet and electron beam radiation) or moisture. These materials may contain various additives including surface energy modifiers (such as surfactants and oleophilic and optionally hydrophilic polymers), plasticizers, antioxidants, pigments, release agents, antistatic agents and the like.

Potentially, microstructured films could also be made from fluoropolymers. Optionally, the fluoropolymers are thermoplastic. Illustrative fluoropolymers include polytetrafluoroethylene, polyvinylfluoride, polyvinylidene fluoride, ethylene tetrafluoride, and copolymers of TFE (tetrafluoroethylene), HFP (hexafluoropropylene), and VDF (vinylidene fluoride), commonly known as THV.

In some embodiments, a thin coating of one polymer may be disposed on the working surface of a microstructured film made from another polymer. As an example, a thin layer of fluoropolymer or silicone could be coated onto a polyurethane microstructured film. Advantageously, a fluoropolymer coating can provide the aerodynamic surface with added protection under harsh outdoor conditions.

Some embodiments use polymers having elastomeric properties at ambient conditions, but can be made plastically deformable at increased temperatures. Elastomeric means that the material will substantially resume its original shape after being stretched. The elastomer can be both pure elastomers and blends with an elastomeric phase or content that will still exhibit substantial elastomeric properties at ambient conditions.

Suitable elastomers include such elastomeric polymers known to those skilled in the art as AB and ABA block copolymers. Star or radial block copolymers may also be suitable in the present invention. Elastomeric block copolymers are typically thermoplastic rubbers that have a rubbery midblock with at least two high glass transition temperature endblocks. Block copolymers are described, for example, in U.S. Patent Nos. 3,562,356 (Nyberg et al.); 3,700,633 (Wald et al.); 4,116,917 (Eckert); and 4,156,673 (Eckert).

There are at least two basic classes of these polymers. In one class, the midblock is an unsaturated rubber. Examples of two types of polymers in this class are known to those skilled in the art as SBS and SIS block copolymers. In the other class, the midblock is a saturated olefin rubber. Examples of two types of polymers in this class are known to those skilled in the art as SEBS and SEPS block copolymers. SIS, SBS, SEBS, and SEPS block copolymers are useful in the present invention, with SIS block copolymers being preferred because of the elastomeric properties exhibited by these polymers.

Other preferred elastomeric compositions include polyurethane elastomers, made from either thermoplastic or thermoset polyurethanes. Other useful compositions include ethylene copolymers such as ethylene vinyl acetates, ethylene/propylene copolymer elastomers or ethylene/propylene/diene terpolymer elastomers, and selected fluoropolymers. Blends of these elastomers with each other or with modifying non-elastomers are also possible. For example, up to 50 weight percent, but preferably less than 30 weight percent, of polymers may be added such as poly(alpha-methyl)styrene, polyesters, epoxies, polyolefins, e.g., polyethylene or certain ethylene/vinyl acetates, preferably those of higher molecular weight, or coumarone-indene resin.

Advantageously, thermoplastic polyurethanes have demonstrated a desirable combination of erosion resistance in demanding aircraft applications and a high degree of friction when rubbed against materials used in shoe soles (commonly leather or rubber). Preferred thermoplastic polyurethanes include the elastomeric polyurethanes used in 3M brand Polyurethane Protective Tape 8671 and 8673 (provided by 3M Company, St. Paul, MN).

These polyurethane materials, when formed into microstructured geometries described herein, can also provide acceptable levels of friction under dry, wet, and oily conditions.

The benefits of having capillary microchannels can be especially significant when using base layer made from elastomeric materials. These materials, which include certain thermoplastic polyurethanes, develop a high degree of elastic strain or deformation when subjected to sliding contact with another material. Elastic strain is highly correlated with friction, but can result in contact being made not only along the tops of the channels but also along its side and bottom surfaces. In a configuration having only major channels, this can be problematic in oily or wet environments because these contaminants can coat the side and bottom surfaces of the channel and act as a lubricant. If present, however, minor capillary channels can help sequester these contaminants, allowing these side and bottom surfaces of the major channels to be kept relatively drier.

In some cases, the capillary microchannels may be formed using inorganic materials (e.g., glasses and ceramics). Useful base layers substantially retain their geometry and surface characteristics upon exposure to liquids, and are inherently plastically deformable or are modified to be plastically deformable. In some embodiments, the base layers of the present disclosure are substantially transparent (e.g., within 5% of a truly transparent material), such that a user can easily view embedded markings or other opaque layers that may be present in the aerodynamic article.

In some embodiments, the base layer may include an additive or surface coating. Examples of additives include flame retardants, hydrophobics, hydrophilics, antimicrobial agents, inorganics, corrosion inhibitors, metallic particles, glass fibers, fillers, clays and nanoparticles.

The working surface of the article may be modified to ensure sufficient capillary forces. For example, the working surface may be modified to be oleophilic. If desired, microstructured films generally may be modified (e.g., by surface treatment, application of surface coatings or agents), or incorporation of selected agents, such that the working surface is rendered oleophilic, whereby oily fluids (such as SAE30 motor oil, used for testing in the Examples) display wet-out behavior on its surface.

Any suitable known method may be utilized to achieve an oleophilic and optionally hydrophilic surface on base layers of the present disclosure. Surface treatments may be employed such as topical application of a surfactant, plasma treatment, vacuum deposition, polymerization of hydrophilic monomers, grafting hydrophobic moieties onto the film surface, corona or flame treatment.

In some cases, a surfactant or other suitable agent may be blended with the resin as an internal characteristic altering additive at the time of film extrusion. Typically, a surfactant is incorporated in the polymeric composition from which the film is made rather than relying upon topical application of a surfactant coating. Topically applied coatings can fill in (and thus blunt) the notches of the capillary microchannels, which is generally not desired. Accordingly, when a coating is applied, it is generally applied thinly to facilitate a uniform and unobtrusive layer on the microstructured surface. An illustrative example of a surfactant that can be incorporated in polyethylene films is TRITON brand X-100 (available from Merck Millipore, Billerica, Mass.), an octylphenoxypolyethoxy-ethanol nonionic surfactant, e.g., used at between about 0.1 and 0.5 weight percent.

Other surfactant materials that are suitable for increased durability requirements for building and construction applications of the present disclosure include Polystep^{®} B22 (available from Stepan Company, Northfield, Ill.) and TRITON^{™} X-35 (available from Merck Millipore, Billerica, Mass.),

A surfactant or mixture of surfactants may be applied to the working surface of the article or impregnated into the article in order to adjust its properties. For example, it may be desired to make the working surface of the article more oleophilic than the film would be without such a component.

Additional information regarding materials suitable for microchannel films discussed herein is described in commonly owned U.S. Patent Publication 2005/0106360 (Johnston et al.).

In some embodiments, an oleophilic coating may be enhanced on the surface of the film by plasma deposition. This may occur in a batch-wise process or a continuous process. As used herein, the term "plasma" means a partially ionized gaseous or fluid state of matter containing reactive species which include electrons, ions, neutral molecules, free radicals, and other excited state atoms and molecules.

In general, plasma deposition involves moving the film through a chamber filled with one or more gaseous silicon-containing compounds at a reduced pressure (relative to atmospheric pressure). Power is provided to an electrode located adjacent to, or in contact with, the film. This creates an electric field, which forms a silicon-rich plasma from the gaseous silicon-containing compounds. Ionized molecules from the plasma then accelerate toward the electrode and impact the surface of the film. By virtue of this impact, the ionized molecules react with, and covalently bond to, the surface forming an oleophilic coating. Temperatures for plasma depositing the oleophilic coating are relatively low (e.g., about 10 degrees Celsius). This is beneficial because high temperatures required for alternative deposition techniques (e.g., chemical vapor deposition) are known to degrade many materials suitable for multi-layer film, such as polyimides. The extent of the plasma deposition may depend on a variety of processing factors, such as the composition of the gaseous silicon-containing compounds, the presence of other gases, the exposure time of the surface of the film to the plasma, the level of power provided to the electrode, the gas flow rates, and the reaction chamber pressure. These factors can help determine an appropriate thickness for the oleophilic coating.

### Printable layer compositions

The printable layer acts as a continuous backing layer for the base layer. The printable layer is most commonly white and opaque for graphic display applications, but could also be transparent, translucent, or colored opaque.

The composition of the printable layer is not particularly restricted and can comprise any polymer having desirable physical properties for the intended application. Properties of flexibility or stiffness, durability, tear resistance, conformability to non-uniform surfaces, die cuttability, weatherability, solvent resistance (from solvents in inks), resistance to gasoline and other fuels, heat resistance and elasticity are examples.

The material for the printable layer is a resin capable of being extruded or coextruded into a substantially two-dimensional film and exhibits tear resistance. Examples of suitable materials for the printable layer include polyester, polyolefin, polyamide, polycarbonate, polyurethane, polystyrene, acrylic, plasticized polyvinyl chloride, or combinations thereof. In an embodiment where the image receptor layer is extrusion coated onto a printable layer, the printable layer may comprise materials that have the same physical properties as described above, but may not be extrudable.

Examples of such materials include polypropylene, polyethylene terephthalate, polyethylene coated papers, plasticized polyvinyl chloride cast from organosols, calendered plasticized polyvinyl chloride, fabrics, nonwoven materials, and scrims.

In another embodiment, the printable layer comprises a non-plasticized polymer to avoid difficulties with plasticizer migration and staining in the image receptor medium. In yet another embodiment, the printable layer comprises a polyolefin that is a propylene-ethylene copolymer containing about 6 weight percent ethylene.

The printable layer may also contain other components such as colorants, fillers, ultraviolet stabilizing agents, slip agents, antiblock agents, antistatic agents, and processing aids familiar to those skilled in the art. For example, an opaque white film might be achieved by including a colorant comprising a titanium dioxide pigment.

The thickness of the printable layer can be at least 25 micrometers, at least 50 micrometers, at least 75 micrometers, at least 100 micrometers, or at least 150 micrometers. Moreover, the thickness of the printable layer can be up to 350 micrometers, up to 325 micrometers, up to 300 micrometers, up to 275 micrometers, or up to 250 micrometers.

A typical thickness of the printable layer is in the range from 13 micrometers to 300 micrometers. Preferably, the thickness of the printable layer allows for easy feeding into a printer or an image transfer device, that is, any device capable of providing an image-wise layer of an ink curable by ultraviolet light onto the printable layer.

### Adhesive compositions

Useful pressure-sensitive adhesives include those capable of retaining microstructured features on an exposed surface after being embossed with a microstructured molding tool, backing or liner, or after being coated on a microstructured molding tool, backing or liner from which it is then removed. The pressure-sensitive adhesive selected for a given application is dependent upon the type of substrate the article will be applied onto and the microstructuring method employed in producing the adhesive-backed article. The microstructured pressure-sensitive adhesives are preferably capable of retaining their microstructured surfaces for a time sufficient to allow convenient application of the adhesive article by the end user.

Any pressure-sensitive adhesive is suitable for the invention. Adhesives are typically selected based upon the type of substrate that they are to be adhered to. Classes of pressure-sensitive adhesives include acrylics, tackified rubber, tackified synthetic rubber, ethylene vinyl acetate, silicone polymers, and the like. Suitable acrylic and silicone adhesives are disclosed, for example, in U.S. Patent Nos. 3,239,478 (Harlan), 3,935,338 (Robertson), 5,169,727 (Boardman), RE24,906 (Ulrich), 4,952,650 (Young et al.), 4,181,752 (Martens et al.), and 8,298,367 (Beger et al.).

Polymers useful for the acrylic pressure-sensitive adhesive layer includes acrylate and methacrylate polymers and copolymers. Such polymers can be made by polymerizing one or more monomeric acrylic or methacrylic esters of non-tertiary alkyl alcohols, with the alkyl groups having from 1 to 20 carbon atoms (for example, from 3 to 18 carbon atoms). Suitable acrylate monomers include, for example, methyl acrylate, ethyl acrylate, n-butyl acrylate, lauryl acrylate, 2-ethylhexyl acrylate, cyclohexyl acrylate, iso-octyl acrylate, octadecyl acrylate, nonyl acrylate, decyl acrylate, and dodecyl acrylate. The corresponding methacrylates can be used as well. Also useful are aromatic acrylates and methacrylates, for example, benzyl acrylate and cyclobenzyl acrylate. Optionally, one or more monoethylenically unsaturated co-monomers may be polymerized with the acrylate or methacrylate monomers. The particular type and amount of co-monomer is selected based upon the desired properties of the polymer.

One group of useful co-monomers includes those having a homopolymer glass transition temperature greater than the glass transition temperature of the (meth)acrylate (i.e., acrylate or methacrylate) homopolymer. Examples of suitable co-monomers falling within this group include acrylic acid, acrylamides, methacrylamides, substituted acrylamides (such as N,N-dimethyl acrylamide), itaconic acid, methacrylic acid, acrylonitrile, methacrylonitrile, vinyl acetate, N-vinyl pyrrolidone, isobornyl acrylate, cyano ethyl acrylate, N-vinylcaprolactam, maleic anhydride, hydroxyalkyl (meth)-acrylates, N,N-dimethyl aminoethyl (meth)acrylate, N,N-diethylacrylamide, beta-carboxyethyl acrylate, vinyl esters of neodecanoic, neononanoic, neopentanoic, 2-ethylhexanoic, or propionic acids, vinylidene chloride, styrene, vinyl toluene, and alkyl vinyl ethers. A second group of monoethylenically unsaturated co-monomers that may be polymerized with the acrylate or methacrylate monomers includes those having a homopolymer glass transition temperature less than the glass transition temperature of the acrylate homopolymer. Examples of suitable co-monomers falling within this class include ethyloxyethoxyethyl acrylate (T_{g} = -71 °C) and a methoxypolyethylene glycol 400 acrylate (T_{g} = -65 °C; available from Shin Nakamura Chemical Co., Ltd., Wakayama, Japan, under the trade designation NK Ester AM-90G). Blends of acrylic pressure-sensitive adhesive polymers and rubber based adhesives in particular, elastomeric block copolymer-based adhesives (for example, tackified SIS or SBS based block copolymer adhesives), may also be used as an acrylic pressure-sensitive adhesive layer such as is described in PCT International Publication No. WO 01/57152 (Khandpur et al.).

The adhesive polymer can be dispersed in solvent or water and coated onto the release liner and dried, and optionally crosslinked. If a solvent-borne or water-borne pressure-sensitive adhesive composition is employed, then the adhesive layer generally undergoes a drying step to remove all or a majority of the carrier liquid. Additional coating steps may be necessary to achieve a smooth surface. The adhesives may also be hot melt coated onto the liner or microstructured backing. Additionally, monomeric pre-adhesive compositions can be coated onto the liner and polymerized with an energy source such as heat, ultraviolet light radiation, or electron beam radiation.

As a further option, the pressure-sensitive adhesive can optionally include one or more additives. Depending on the method of polymerization, the coating method, and end user application, such additives may include initiators, fillers, plasticizers, tackifiers, chain transfer agents, fibrous reinforcing agents, woven and non-woven fabrics, foaming agents, antioxidants, stabilizers, fire retardants, viscosity enhancing agents, coloring agents, and mixtures thereof.

The rheology of the adhesive can be characterized by its Tangent Delta value, or the ratio of the loss shear modulus (G") over the storage shear modulus (G') of the adhesive material. In some embodiments, the adhesive displays a Tangent Delta value of at most 0.5, at most 0.48, at most 0.45, at most 0.42, at most 0.4, or at most 0.35, as measured by uniaxial dynamic mechanical analysis according to known methods at a frequency of 1 Hz under ambient conditions.

### EXAMPLES

Objects and advantages of this disclosure are further illustrated by the following nonlimiting examples. Particular materials and amounts thereof recited in these examples, as well as other conditions and details, should not be construed to unduly limit this disclosure.

Unless otherwise noted, all parts, percentages, ratios, etc. in the Examples and the rest of the specification are by weight. Unless otherwise noted, all reagents were obtained or are available from Sigma-Aldrich Company, St. Louis, Missouri, or may be synthesized by known methods.

The following abbreviations are used to describe the examples:
- °C:: degree Centigrade
- °F:: degree Fahrenheit
- cm:: centimeter
- cm²:: square centimeter
- in.Hg:: inches mercury
- in/min:: inches per minute
- kPa:: kiloPascal
- lb:: pound
- mL:: milliliter
- µm:: micrometers
- mil:: 1/1000 inch
- min:: minute
- sec:: second

Abbreviations for the materials used in the examples are as follows:
CTC: A microreplicated poly(ethylene) coated paper release liner, obtained under the trade designation "CONTROLTAC", from 3M Company, St. Paul, Minnesota.
PPT-8671: An adhesive coated, 12 mil (304.8 µm) gloss white polyurethane elastomer film having the CTC liner, obtained under the trade designation "POLYURETHANE PROTECTIVE TAPE 8671" from 3M Company.
PPT-8673: An adhesive coated, 12 mil (304.8 µm) transparent polyurethane elastomer film, obtained under the trade designation "POLYURETHANE PROTECTIVE TAPE 8673" from 3M Company.
PPT-8674: An adhesive coated, 6 mil (152.4 µm) transparent polyurethane elastomer film, obtained under the trade designation "POLYURETHANE PROTECTIVE TAPE 8674" from 3M Company.

### Test Methods

### Coefficient of Friction (COF)

The liner was removed from a 9 × 11 inch (22.86 × 27.94 cm) sample and laminated to an equally sized die using a rubber roller. A 2 lb (907.2 grams), 2 × 4 inch (50.08 by 10.16 cm), sled was then pulled across the sample by means of a model Hytronic press, with a Chatillon Model LR5K with 500 Newton load Cell at a 12 in/min (30.48 cm/min). The test was repeated wherein the sample was sprayed with either 100 mL water or CITGO Supergard SAE30 motor oil after laminating to the die. With respect to the channel patterns, COF was measured across and parallel to the microstructured channels; with respect to the discrete trapezoid array patterns and the Comparative, COF measurement was omnidirectional. Results are reported as the average of three measurements per test specimen, three test specimens per Example.

### Oil Wicking Test

0.1 mL of the SAE30 motor oil was dropped onto the surface of a horizontally positioned microreplicated sample, at 21°C, to form an approximately 5-mm diameter droplet. The droplet size was then measured at 30 seconds and 2 minutes.

### Tooling:

A series of microreplicated polypropylene tools (MRT's), having adjacent or discrete parallel triangular channels, or discrete trapezoid arrays, were used to make the examples. Tool dimensions are listed in Table 1.

**TABLE 1**

| Tool | Pattern Type | | Angle Φ (degrees) | Pattern Dimensions (µ m) | | | | | |
|---|---|---|---|---|---|---|---|---|---|
| | Format | Profile | | Base Width | | Height | | Spacing | |
| | | | | D1 | D2 | H1 | H2 | W1 | W2 |
| MRT-1 | Channel | Triangular | 26.5 | 63 | NA | 63 | NA | 63 | 0 |
| MRT-2 | Channel | Triangular | 26.5 | 100 | NA | 100 | NA | 100 | 0 |
| MRT-3 | Channel | Triangular | 26.5 | 80 | NA | 80 | NA | 150 | NA |
| MRT-4 | Channel | 1x3 Nested Truncated Triangular/ Rectangular | 0 | 50 | 30 | 142 | 33 | 223 | 50 |
| MRT-5 | Discrete Array | Regular Tetrahedral | ~45 | 350 | NA | 156 | NA | 350 | NA |
| MRT-6 | Discrete Array | Square Base Pyramidal | ~37 | 400 | NA | 600 | NA | 400 | NA |

| | | | | | | | | | |
|---|---|---|---|---|---|---|---|---|---|
| NA = Not applicable | | | | | | | | | |

### Example 1

The top clear liner from a 24 by 40 inch (60.96 by 101.60 cm) section of PPT-8671 was removed. A series of arrows were printed onto the white surface of the PPT-8671 using a black ink, type "1500 UV SOLVENT INK" from 3M Company, and the ink dried and UV cured. A similarly sized sheet of PPT-8674, with the adhesive removed, was positioned over the printed PPT-8671, followed by tooling MRT-2. This assembly was transferred to a vacuum bag, the bag sealed, and a vacuum of 10 in.Hg (33.9 KPa) was applied, after which the bag was placed in an oven at 280°F (137.8°C) for 1 hour. The bag was removed from the oven and allowed to cool to below 150°F (65.6°C), approximately 30 minutes. The assembly was then removed from the bag and the tooling peeled off to reveal essentially a mirror image of the tooling embossed into the PPT surface. The CTC liner was also removed from the opposing adhesive side of the PPT and the tape laminated onto a 1 mm thick aluminum plate.

### Comparative A

A printed PPT prepared as generally described in Example 1, wherein the MRT-2 Tooling was substituted with a planar sheet of polypropylene, resulting in a smooth PPT-8674 surface. Coefficient of Friction data is listed in Table 2.

### Comparative B

A 24 by 40 inch (60.96 by 101.60 cm) section of MRT-1 tooling was positioned over the polyurethane surface of a similarly sized section of PPT-8673. This assembly was transferred to a vacuum bag, the bag sealed, and a vacuum of 10 in.Hg (33.9 kPa) was applied, after which the bag was placed in an oven at 280°F (137.8°C) for 1 hour. The bag was removed from the oven and allowed to cool to below 150°F (65.6°C), approximately 30 minutes. The assembly was then removed from the bag and the tooling peeled off to reveal essentially a mirror image of the tooling embossed into the PPT surface. The liner was also removed from the opposing adhesive side of the PPT and the tape laminated onto a 1 mm thick aluminum plate for subsequent Coefficient of Friction testing.

### Comparatives C-D & Examples 2-4

The procedure generally described for preparing Comparative B was repeated, wherein the MRT-1 tooling was substituted as listed in Table 2.

### Example 5

The procedure generally described for preparing Example 1 was repeated, wherein the tooling MRT-1 was substituted by MRT-3.

Comparatives A-D and Examples 2-4 were evaluated for oil wicking as described above. Results are listed in Table 3.

**TABLE 2**

| Sample | Tooling | Test Direction | Coefficient of Friction (COF) | | | | | |
|---|---|---|---|---|---|---|---|---|
| | | | Dry | | Water | | Oil | |
| | | | Static | Kinetic | Static | Kinetic | Static | Kinetic |
| Comparative A | N/A | Omni | 1.03 | 1.12 | 0.76 | 0.81 | 0.086 | 0.049 |
| Comparative B | MRT-1 | Parallel | 1.43 | 1.27 | 0.93 | 0.76 | 0.55 | 0.31 |
| | | Cross | 0.94 | 0.83 | 1.06 | 0.83 | 0.31 | 0.18 |
| Comparative C | MRT-2 | Parallel | 1.36 | 1.34 | 1.37 | 1.32 | 0.31 | 0.29 |
| | | Cross | 1.24 | 1.13 | 1.08 | 0.86 | 0.33 | 0.24 |
| Comparative D | MRT-3 | Parallel | 1.22 | 1.15 | 1.19 | 0.87 | 0.44 | 0.3 |
| | | Cross | 1.39 | 1.09 | 1.07 | 0.93 | 0.82 | 0.53 |
| Example 2 | MRT-4 | Parallel | 0.95 | 0.95 | 0.79 | 0.68 | 0.37 | 0.25 |
| | | Cross | 1.04 | 1.04 | 1.15 | 1.11 | 0.48 | 0.37 |
| Example 3 | MRT-5 | Omni | 1.29 | 0.94 | 1.12 | 1.05 | 0.97 | 0.42 |
| Example 4 | MRT-6 | Omni | 1.18 | 0.65 | 1.36 | 0.8 | 0.74 | 0.36 |

**TABLE 3**

| Sample | Tooling | Orientation | Oil Droplet Size (mm) | | |
|---|---|---|---|---|---|
| | | | @ Start | @30 sec | @2 min |
| Comparative A | N/A | Omni | 5x5 | 6x6 | 7x8 |
| Comparative B | MRT-1 | Parallel | 5x5 | 5x7 | 5x8 |
| Comparative C | MRT-2 | Parallel | 5x5 | 5 × 14 | 5x 16 |
| Comparative D | MRT-3 | Parallel | 5x5 | 5x 10 | 5 × 12 |
| Example 2 | MRT-4 | Parallel | 5x5 | 5 × 40 | 5 × 50 |
| Example 3 | MRT-5 | Omni | 5x5 | 6x 12 | 7 × 20 |
| Example 4 | MRT-6 | Omni | 5x5 | 6x6 | 8x8 |

## Claims

1. An aerodynamic article (200) comprising:
an aerodynamic body;
a microstructured surface (202) on the aerodynamic body, comprising:
a plurality of parallel, primary ridges (220) defining major capillary channels; and
a plurality of parallel, secondary ridges (222) having a height less than that of the primary ridges (220) and extending between and generally parallel to the primary ridges, each secondary ridge at least partially defining two or more minor capillary channels within a respective major capillary channel wherein the primary ridges have an average height H1, the secondary ridges have an average height H2, and the ratio H1/H2 is in the range from 2 to 10, **characterised in that** the microstructured surface is an oleophilic surface.

2. The aerodynamic article of claim 1, wherein the aerodynamic body is comprised of a substrate having a microstructured film disposed on the substrate, the microstructured surface (202) being provided on the microstructured film.

3. The aerodynamic article of any one of claims 1-2, wherein the primary ridges (220) have an average height H1 in the range of from 25 micrometers to 250 micrometers.

4. The aerodynamic article of any one of claims 1-3, wherein the secondary ridges (222) have an average height H2 in the range of from 5 micrometers to 50 micrometers.

5. The aerodynamic article of any one of claims 1-4, wherein the primary ridges (202) have an average lateral spacing W1 in the range from 25 micrometers to 500 micrometers.

6. The aerodynamic article of any one of claims 1-5, wherein the primary ridges (202) have an average height H1 and an average lateral spacing W1, the ratio W1/H1 being in the range from 1 to 5.

7. The aerodynamic article of any one of claims 1-6 wherein the primary ridges (220) have sloping sidewalls (228), with a sidewall angle φ of from 0 degrees to 60 degrees, measured from a normal vector extending from the bottom surface of the major capillary channels.

8. The aerodynamic article of any of claims 1-7:
wherein the microstructured surface (202) is provided by a microstructured film having opposed first and second major surfaces, the microstructured surface being present on the first major surface and further comprising an adhesive layer disposed on the second major surface adhering the microstructured film to an aerodynamic component.

9. The aerodynamic article of claim 8, further comprising a printable layer (210) located between the microstructured film and the adhesive layer (224).

10. The aerodynamic article of claim 9, further comprising a printed layer (208) located between the microstructured film and the printable layer (210), the printed layer (208) comprising a colorant and extending across an area less than that of the printable layer (210).

11. A method of providing a frictional surface on an aerodynamic component, the method comprising:
determining a direction of air flow over an external surface of the aerodynamic component; and
disposing onto the external surface a microstructured film with a first major surface being an oleophilic surface and comprising:
a plurality of primary ridges (220) defining major capillary channels aligned with the direction of air flow; and
a plurality of secondary ridges (222) having a height less than that of the primary ridges (220) and extending between and generally parallel to the primary ridges, each secondary ridge (222) at least partially defining two or more minor capillary channels within a respective major capillary channel
wherein the primary ridges have an average height H1, the secondary ridges have an average height H2, and the ratio H1/H2 is in the range from 2 to 10.

## Patentansprüche

1. Ein aerodynamischer Artikel (200), umfassend:
einen aerodynamischen Körper;
eine mikrostrukturierte Oberfläche (202) auf dem aerodynamischen Körper, umfassend:
eine Mehrzahl von parallelen, primären Rippen (220), die große kapillare Kanäle definieren; und
eine Mehrzahl von parallelen, sekundären Rippen (222), die eine Höhe aufweisen, die kleiner als die der primären Rippen (220) ist und sich zwischen und im Allgemeinen parallel zu den primären Rippen erstrecken, wobei jede sekundäre Rippe mindestens teilweise zwei oder mehr kleine kapillare Kanäle innerhalb eines jeweiligen großen kapillaren Kanals definiert, wobei die primären Rippen eine durchschnittliche Höhe H1 aufweisen, die sekundären Rippen eine durchschnittliche Höhe H2 aufweisen und das Verhältnis H1/H2 im Bereich von 2 bis 10 liegt, **dadurch gekennzeichnet, dass** die mikrostrukturierte Oberfläche eine oleophile Oberfläche ist.

2. Der aerodynamische Artikel nach Anspruch 1, wobei der aerodynamische Körper aus einem Substrat besteht, das eine mikrostrukturierte Folie aufweist, die auf dem Substrat angeordnet ist, wobei die mikrostrukturierte Oberfläche (202) auf der mikrostrukturierten Folie bereitgestellt ist.

3. Der aerodynamische Artikel nach einem der Ansprüche 1-2, wobei die primären Rippen (220) eine durchschnittliche Höhe H1 im Bereich von 25 Mikrometern bis 250 Mikrometern aufweisen.

4. Der aerodynamische Artikel nach einem der Ansprüche 1-3, wobei die sekundären Rippen (222) eine durchschnittliche Höhe H2 im Bereich von 5 Mikrometern bis 50 Mikrometern aufweisen.

5. Der aerodynamische Artikel nach einem der Ansprüche 1-4, wobei die primären Rippen (202) einen durchschnittlichen Seitenabstand W1 im Bereich von 25 Mikrometern bis 500 Mikrometern aufweisen.

6. Der aerodynamische Artikel nach einem der Ansprüche 1-5, wobei die primären Rippen (202) eine durchschnittliche Höhe H1 und einen durchschnittlichen Seitenabstand W1 aufweisen, wobei das Verhältnis W1/H1 im Bereich von 1 bis 5 liegt.

7. Der aerodynamische Artikel nach einem der Ansprüche 1-6, wobei die primären Rippen (220) schräge Seitenwände (228) mit einem Seitenwandwinkel φ von 0 Grad bis 60 Grad aufweisen, gemessen von einem Normalenvektor, der sich von der unteren Oberfläche der großen kapillaren Kanäle erstreckt.

8. Der aerodynamische Artikel nach einem der Ansprüche 1-7:
wobei die mikrostrukturierte Oberfläche (202) durch eine mikrostrukturierte Folie bereitgestellt ist, die gegenüberliegende erste und zweite große Oberflächen aufweist, wobei die mikrostrukturierte Oberfläche auf der ersten großen Oberfläche vorhanden ist und ferner eine Klebstoffschicht umfasst, die auf der zweiten großen Oberfläche angeordnet ist, welche die mikrostrukturierte Folie an eine aerodynamische Komponente klebt.

9. Der aerodynamische Artikel nach Anspruch 8, ferner umfassend eine druckfähige Schicht (210), die sich zwischen der mikrostrukturierten Folie und der Klebstoffschicht (224) befindet.

10. Der aerodynamische Artikel nach Anspruch 9, ferner umfassend eine gedruckte Schicht (208), die sich zwischen der mikrostrukturierten Folie und der druckfähigen Schicht (210) befindet, wobei die gedruckte Schicht (208) einen Farbstoff umfasst und sich über eine Fläche erstreckt, die kleiner als die der druckfähigen Schicht (210) ist.

11. Ein Verfahren zum Bereitstellen einer Reibungsoberfläche auf einer aerodynamischen Komponente, wobei das Verfahren umfasst:
Bestimmen einer Richtung der Luftströmung über eine Außenoberfläche der aerodynamischen Komponente; und
Anordnen einer mikrostrukturierten Folie auf die Außenoberfläche, wobei eine erste große Oberfläche eine oleophile Oberfläche ist und Folgendes umfasst:
eine Mehrzahl von primären Rippen (220), die große kapillare Kanäle definieren, die mit der Richtung der Luftströmung ausgerichtet sind; und
eine Mehrzahl von sekundären Rippen (222), die eine Höhe aufweisen, die kleiner als die der primären Rippen (220) ist und sich zwischen und im Allgemeinen parallel zu den primären Rippen erstrecken, wobei jede sekundäre Rippe (222) mindestens teilweise zwei oder mehr kleine kapillare Kanäle innerhalb eines jeweiligen großen kapillaren Kanals definiert
wobei die primären Rippen eine durchschnittliche Höhe H1 aufweisen, die sekundären Rippen eine durchschnittliche Höhe H2 aufweisen und das Verhältnis H1/H2 im Bereich von 2 bis 10 liegt.

## Revendications

1. Article aérodynamique (200) comprenant :
un corps aérodynamique ;
une surface microstructurée (202) sur le corps aérodynamique, comprenant :
une pluralité de crêtes primaires parallèles (220) définissant des canaux capillaires majeurs ; et
une pluralité de crêtes secondaires parallèles (222) ayant une hauteur inférieure à celle des crêtes primaires (220) et s'étendant entre les et généralement parallèles aux crêtes primaires, chaque crête secondaire définissant au moins partiellement deux canaux capillaires mineurs ou plus au sein d'un canal capillaire majeur respectif dans lequel les crêtes primaires ont une hauteur moyenne H1, les crêtes secondaires ont une hauteur moyenne H2, et le rapport H1/H2 est dans la plage allant de 2 à 10, **caractérisé en ce que** la surface microstructurée est une surface oléophile.

2. Article aérodynamique selon la revendication 1, dans lequel le corps aérodynamique est constitué d'un substrat ayant un film microstructuré disposé sur le substrat, la surface microstructurée (202) étant fournie sur le film microstructuré.

3. Article aérodynamique selon l'une quelconque des revendications 1 à 2, dans lequel les crêtes primaires (220) ont une hauteur moyenne H1 dans la plage allant de 25 micromètres à 250 micromètres.

4. Article aérodynamique selon l'une quelconque des revendications 1 à 3, dans lequel les crêtes secondaires (222) ont une hauteur moyenne H2 dans la plage allant de 5 micromètres à 50 micromètres.

5. Article aérodynamique selon l'une quelconque des revendications 1 à 4, dans lequel les crêtes primaires (202) ont un espacement latéral moyen W1 dans la plage allant de 25 micromètres à 500 micromètres.

6. Article aérodynamique selon l'une quelconque des revendications 1 à 5, dans lequel les crêtes primaires (202) ont une hauteur moyenne H1 et un espacement latéral moyen W1, le rapport W1/H1 étant dans la plage allant de 1 à 5.

7. Article aérodynamique selon l'une quelconque des revendications 1 à 6 dans lequel les crêtes primaires (220) ont des parois latérales inclinées (228), avec un angle de paroi latérale φ allant de 0 degré à 60 degrés, mesuré à partir d'un vecteur normal s'étendant à partir de la surface inférieure des canaux capillaires majeurs.

8. Article aérodynamique selon l'une quelconque des revendications 1 à 7 :
dans lequel la surface microstructurée (202) est fournie par un film microstructuré ayant des première et deuxième surfaces principales opposées, la surface microstructurée étant présente sur la première surface principale et comprenant en outre une couche adhésive disposée sur la deuxième surface principale faisant adhérer le film microstructuré à un composant aérodynamique.

9. Article aérodynamique selon la revendication 8, comprenant en outre une couche imprimable (210) située entre le film microstructuré et la couche adhésive (224).

10. Article aérodynamique selon la revendication 9, comprenant en outre une couche imprimée (208) située entre le film microstructuré et la couche imprimable (210), la couche imprimée (208) comprenant un colorant et s'étendant à travers une zone inférieure à celle de la couche imprimable (210).

11. Procédé de fourniture d'une surface de frottement sur un composant aérodynamique, le procédé comprenant :
la détermination d'une direction de flux d'air par-dessus une surface externe du composant aérodynamique ; et
la mise en place sur la surface externe d'un film microstructuré avec une première surface principale étant une surface oléophile et comprenant :
une pluralité de crêtes primaires (220) définissant des canaux capillaires majeurs alignés avec la direction de flux d'air ; et
une pluralité de crêtes secondaires (222) ayant une hauteur inférieure à celle des crêtes primaires (220) et s'étendant entre les et généralement parallèle aux crêtes primaires, chaque crête secondaire (222) définissant au moins partiellement deux canaux capillaires mineurs ou plus au sein d'un canal capillaire majeur respectif
dans lequel les crêtes primaires ont une hauteur moyenne H1, les crêtes secondaires ont une hauteur moyenne H2, et le rapport H1/H2 est dans la plage allant de 2 à 10.
